# EUROPEAN PATENT SPECIFICATION

(11) **EP 4 258 452 B1**
(45) Date of publication and mention of the grant of the patent: **03.06.2026**
(21) Application number: 23166680.1
(22) Date of filing: 05.04.2023
(51) Int. Cl.: H01M 50/517, H01M 50/503, H01M 50/588, H01M 50/505, H01R 4/00, H01R 11/00, B60L 50/64

(54) **ELECTRICAL CONNECTOR TO CONNECT THE TERMINALS OF TWO ADJACENT BATTERY MODULES TO ONE ANOTHER IN A POWER STORAGE SYSTEM**
ELEKTRISCHER VERBINDER ZUM VERBINDEN DER ANSCHLÜSSE ZWEIER BENACHBARTER BATTERIEMODULE IN EINEM STROMSPEICHERSYSTEM
CONNECTEUR ÉLECTRIQUE POUR CONNECTER LES BORNES DE DEUX MODULES DE BATTERIE ADJACENTS L'UN À L'AUTRE DANS UN SYSTÈME DE STOCKAGE D'ÉNERGIE

(30) Priority: 06.04.2022 IT 202200006839
(43) Date of publication of application: 11.10.2023
(73) Proprietor: FERRARI S.p.A., 41100 Modena (IT)
(72) Inventor: POGGIO, Luca, 41100 MODENA (IT); LIGABUE, Elena, 41100 MODENA (IT); VENTURI, Enrico, 41100 MODENA (IT)
(74) Representative: Studio Torta S.p.A.

(56) References cited:
- US-A1- 2017 352 964
- US-B2- 7 667 952

## Description

### CROSS-REFERENCE TO RELATED APPLICATIONS

This patent application claims priority from Italian patent application no. 102022000006839 filed on April 6, 2022.

### TECHNICAL FIELD

The invention relates to an electrical connector to connect the terminals of two adjacent battery modules to one another in a power storage system.

### PRIOR ART

A vehicle can be provided with one single electric motor or with several electric motors (in which case, the drive is a full electric drive) or it can be provided with one or more electric motors combined with a combustion engine (in which case, the drive can be a full electric drive, a combustion drive or a hybrid drive).

The electric motor (or each electric motor) is mechanically connected to the drive wheels and is electrically connected to a power storage system through the interposition of an electronic power converter.

The power storage system consists of two groups of electrochemical cells (usually with a "pouch" structure or with a prismatic structure) connected to one another in series (in order to increase the total electrical voltage). The power storage system can have large dimensions and great weights (especially in case of a full electric drive in which the power storage system can weigh more than 500 kg).

In modern vehicles, the power storage system has a flat and (relatively) thin conformation so that it can be integrated in the floorboard of the vehicle. In this arrangement, the power storage system comprises a container having a lower wall (which constitutes the bottom of the vehicle facing the road surface), an upper wall and a side wall, which is perpendicular to the lower and upper walls and connects the lower and upper walls to one another. Inside the container there are the different groups of electrochemical cells, each forming a corresponding battery module.

Patent application US2018114961A1 discloses a power storage system for a vehicle comprising a plurality of battery modules, which are adjacent to one another and are mounted on a base plate; in order to couple the battery modules to the base plate, each battery module is provided with tubular and hollow connection bodies, into which respective screws are inserted, which are screwed into threaded holes made in the base plate.

Patent application EP21206804.3 discloses a power storage system for a vehicle comprising: a container provided with a lower wall; and a plurality of battery modules, which are housed inside the container. Each battery module has a group of electrochemical cells and two containing walls, which are oriented perpendicularly to the lower wall of the container and are arranged parallel to one another on opposite sides of the group of electrochemical cells so as to clamp the group of electrochemical cells between them; each containing wall has at least one tubular connection body and there are a plurality of locking pins, which are fixed to the lower wall, perpendicularly project from the lower wall and engage the connection bodies.

Besides mechanically fixing the battery modules inside the container of the power storage system, the battery modules also need to be connected to one another (typically in series). In particular, two adjacent battery modules have two corresponding terminals (each consisting of a copper block having, at the centre, a threaded hole), which have to be electrically connected to one another by means of an electrical connector. The electrical connector comprises a copper conductor bar, which is sized so as to be laid (forming a "*bridge*") on the terminals of the two adjacent battery modules and has, at its ends, two through holes; once the conductor bar of the electrical connect has been laid on the terminals of the two adjacent battery modules, two screws are inserted into the through holes of the conductor bar in order to be screwed into the threaded holes of the corresponding terminals.

Patent US7667952B2 and patent application US2017352964A1 disclose an electrical connector to connect the terminals of two adjacent battery modules to one another in a power storage system; in particular, the electrical connector comprises a conductor bar, which is provided with two through holes and is configured to be laid on the two terminals of the two battery modules, and two screws, each arranged through a through hole of the conductor bar with a clearance and configured to be screwed into a threaded hole of a corresponding terminal.

### DESCRIPTION OF THE INVENTION

The object of the invention is to provide an electrical connector to connect the terminals of two adjacent battery modules to one another in a power storage system, said electrical connector making the connection safer, reducing the electrical resistance of the connection and, at the same time, being easy and economic to be manufactured.

According to the invention, there is provided an electrical connector to connect the terminals of two adjacent battery modules to one another in a power storage system as claimed in the appended claims.

### BRIEF DESCRIPTION OF THE DRAWINGS

The invention will now be described with reference to the accompanying drawings showing a non-limiting embodiment thereof, wherein:
- figure 1 is an exploded perspective view, with parts removed for greater clarity, of a power storage system of a vehicle;
- figure 2 is a plan view, with part removed for greater clarity, of two modules of the power storage system of figure 1 connected to one another by an electrical connector according to the invention;
- figures 3 and 4 are two different exploded perspective views of the electrical connector of figure 2; and
- figure 5 is a cross-section view of the electrical connector of figure 2.

### PREFERRED EMBODIMENTS OF THE INVENTION

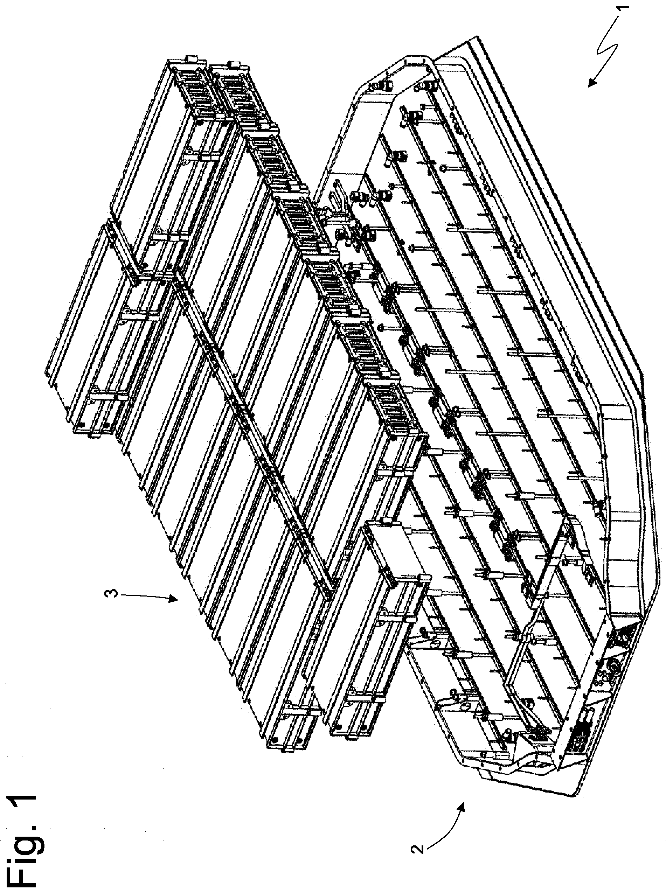

In figure 1, number 1 indicates, as a whole, a power storage system of a road vehicle (in particular, a car) provided with chemical batteries.

The power storage system 1 comprises a container 2 and a plurality of battery modules 3 (in particular, fifteen battery modules 3), each arranged in the container 2, (at first) separate from and independent of the other battery modules 3 and accommodating, on the inside, a group of electrochemical cells with a parallelepiped shape (namely, having a "pouch" structure or a prismatic structure).

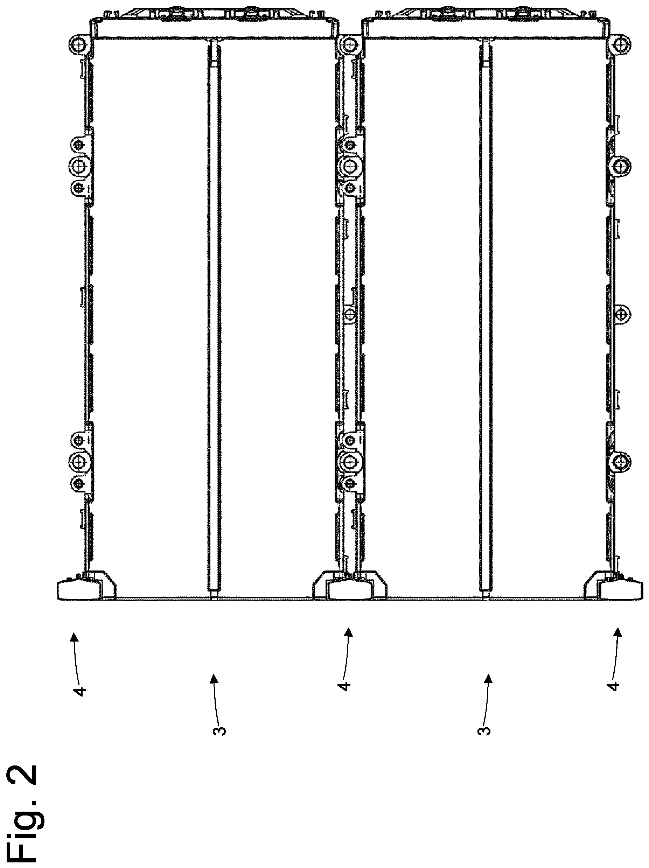

According to figure 2, the different battery modules 3 are electrically connected to one another in series by means of a plurality of electrical connectors 4.

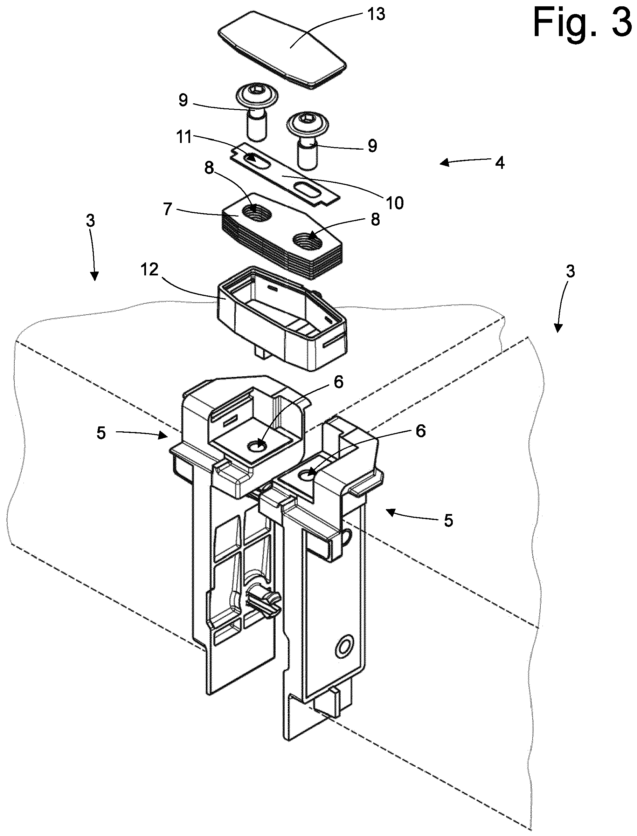

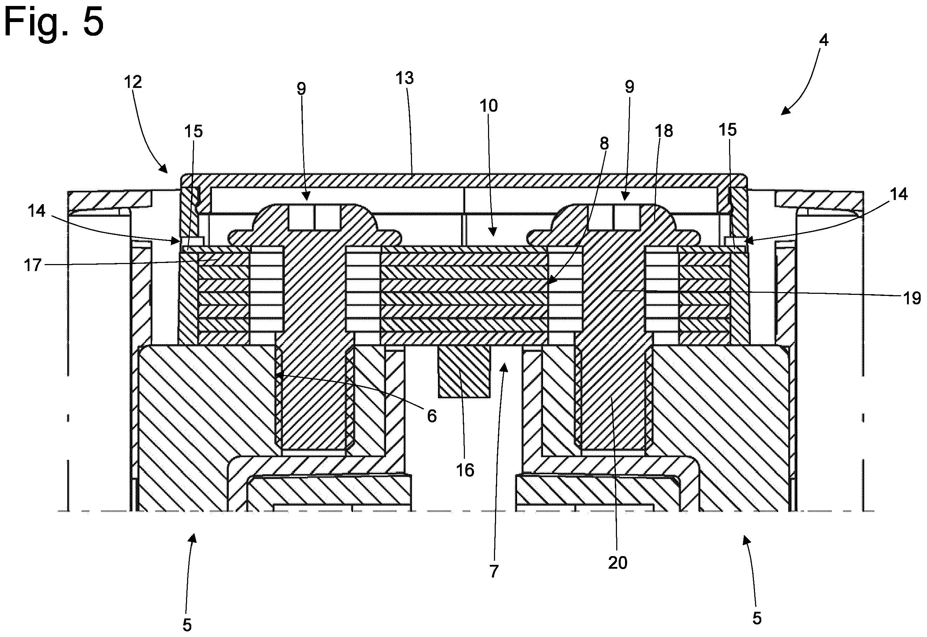

According to figures 3 and 5, each electrical connector 4 connects the terminals 5 of two adjacent battery modules 3 to one another; in particular, each terminal 5 has a threaded dead hole 6 to create the mechanical connection of the corresponding electrical connector 4.

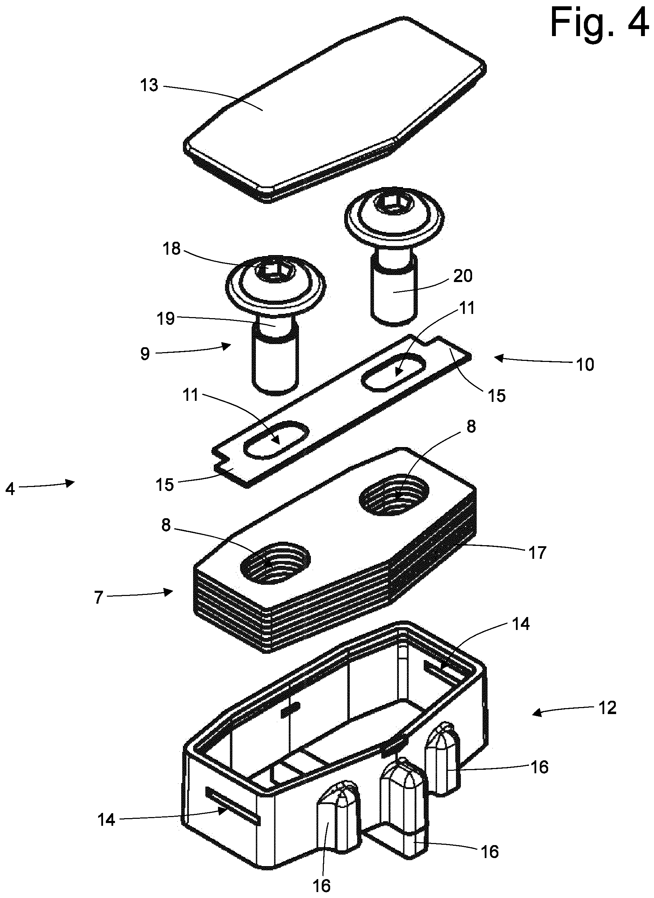

According to figures 3, 4 and 5, each electrical connector 4 comprises a conductor bar 7 (usually made of copper), which is provided with two through holes 8 at the ends and is configured to be laid on the two terminals 5 of the battery modules 3. Furthermore, each electrical connector 4 comprises two screws 9, each arranged through a through hole 8 of the conductor bar 7 with a clearance and screwed (namely, configured to be screwed) into a threaded hole 7 of a corresponding terminal 5.

Each through hole 8 of the conductor bar 7 has larger dimensions than a diameter of the corresponding screw 9 so as to allow the corresponding screw 9 to move inside the through hole 8 with a given clearance, so that its position can be adjusted in order to make up for building tolerances. According to a preferred embodiment, each through hole 8 of the conductor bar 7 has a longitudinal size that is greater than a transverse size (namely, each through hole 8 has an oblong shape, with the longitudinal size prevailing over the transverse size) and both the longitudinal size and the transverse size of each through hole 8 are greater than the diameter of the corresponding screw 9 so as to allow the corresponding screw 9 to move inside the through hole 8 with a given clearance both longitudinally and transversely (so that its position can be adjusted in order to make up for building tolerances).

Each electrical connector 4 comprises a retaining sheet 10 (usually made of copper), which is laid on the conductor bar 7 and has, at the ends, two through holes 11, each aligned with a corresponding through hole 8. Each screw 9 is screwed into the corresponding through hole 11; namely, in order to be inserted through the corresponding through hole 11, it has to be screwed into the corresponding through hole 11; in other words, the thread of each screw 9 does not allow the screw 9 to go through the corresponding hole 11, if not through a screwing operation (namely, an outer diameter of the thread of each screw 9 is larger than a width of the corresponding through hole 11).

According to a preferred embodiment, each through hole 11 of the retaining sheet 10 has a longitudinal size that is greater than a transverse size (namely, each through hole 11 has an oblong shape, with the longitudinal size prevailing over the transverse size), thus reproducing the shape of the through holes 8 of the conductor bar 7. Each through hole 11 of the retaining sheet 10 has a longitudinal size that is greater than the outer diameter of the thread of each screw 9 and a transverse size that is (slightly) smaller than the outer diameter of the thread of each screw 9 (hence, the screw 9 has to be screwed into the through hole 11 in order to be inserted into the through hole 11).

The two screws 9 are previously screwed into the through holes 11 of the retaining sheet 10 and this constrains the two screws 9 to the retaining sheet 10; in this way, the screws 9 (which cannot be removed from the retaining sheet 10, if not by being unscrewed through the through holes 11 of the retaining sheet 10) always remain coupled to the retaining sheet 10 and cannot get "*lost*" following a wrong or clumsy handling of an operator.

Each electrical connector 4 can comprise a shell 12, which is made of an electrically insulating material, is open at the top and at the bottom and contains, on the inside, the conductor bar 7; preferably (though not necessarily), each electrical connector 4 also comprises a lid 13, which is made of an electrically insulating material and is coupled to the shell 12 in order to close the shell 12 at the top. The shell 12 could be overmoulded around the conductor bar 7 or the conductor bar 7 could be inserted (with force) into the previously moulded shell 12 (usually through a given elastic deformation of the shell 12).

According to a preferred embodiment, the retaining sheet 10 is contained (inserted, locked) inside the shell 12, so that it cannot be removed from the shell 12 once it is coupled to the screws 9; in this way, the screws 9 (which cannot be removed from the retaining sheet 10, if not by being unscrewed through the through holes 11 of the retaining sheet 10) always remain coupled to the shell 12 (hence, to the electrical connector 4) and cannot get "*lost*" following a wrong or clumsy handling of an operator.

According to a preferred embodiment, the retaining sheet 10 is contained in the shell 12, thus allowing the retaining sheet 10 to make (limited) transverse movements (namely, movements in a plane that is perpendicular to a longitudinal axis of the screws 9); in this way, the retaining sheet 10, to which the screws 9 are constrained, can (slightly) adjust its position in order to make up for building tolerances. In other words, the retaining sheet 10 can make (limited) transverse movements (namely, movements in a plane that is perpendicular to a longitudinal axis of the screws 9) inside the shell 12.

On the other hand, the conductor bar 7 is completely locked in the shell 12 and, hence, cannot make any movement relative to the shell 12.

In particular, the shell 12 laterally has two opposite through slits 14, through which the retaining sheet 10 can be inserted inside the shell 12 (alternatively, there could be one single through slit 14 arranged on one single side). The retaining sheet 10 preferably is longer than an inner space of the shell 12 so that the retaining sheet 10 can be arranged inside the shell 12 only by engaging, on both sides, the corresponding slits 14. In this way, when the screws 9 have been inserted (screwed) into the corresponding through holes 11 of the retaining sheet 10, the retaining sheet 10 cannot be removed from the slits 14, because this movement is forbidden by the presence of the screws 11, and the retaining sheet 10 cannot be removed in an upward direction, because this movement is forbidden by the ends of the retaining sheet 10 arranged inside the corresponding slits 14; therefore, the assembly consisting of the retaining sheet 10 and of the screws 9 inserted (screwed) into the corresponding through holes 11 of the retaining sheet 10 cannot be separated from the shell 12 (if not by unscrewing each screw 9 from the corresponding through hole 11).

According to a preferred embodiment, a central part of the retaining sheet 10 of each electrical connector 4 has a width that is substantially the same as the width of the slits 14 (so as to substantially engage the slits 14 without a clearance), whereas, at the two ends, the retaining sheet 10 of each electrical connector 4 has two appendages 15 with a smaller width than the central part and, when the retaining sheet 10 is inserted in the shell 12, the appendages 15 of the retaining sheet 10 engage the corresponding slits 14 (namely, they are inside the corresponding slits 14).

According to a preferred embodiment, the through slits 14 of the shell 12 are misaligned relative to the through holes 8 of the conductor bar 7, so that, once it is inserted through a slit 14, the retaining sheet 10 has to be translated perpendicularly to the through slit 14 in order to align the through holes 11 of the retaining sheet 10 with the corresponding through holes 8 of the conductor bar 7; this translation of the retaining sheet 10 is enabled by the presence of the appendages 15 with a smaller width at the two ends of the retaining sheet 10. The asymmetric arrangement of the appendages 15 of the retaining sheet 10 makes sure that the retaining sheet 10 can correctly be inserted only with one single orientation (namely, if the retaining sheet 10 is inserted with a contrary, hence undesired orientation, the through holes 11 of the retaining sheet 10 cannot be aligned with the corresponding through holes 8 of the conductor bar 7).

According to a preferred embodiment, the shell 12 of each electrical conductor 4 comprises protuberances 16, which have an asymmetric position or conformation relative to the shell 12 and are configured to engage respective openings of the power storage system 1 only when the shell 12 has one single predetermined orientation. Namely, the protuberances 16 ensure that each electrical connector 4 can always be mounted in the power storage system 1 only with one single predetermined orientation, thus avoiding any kind of positioning error.

According to a preferred embodiment, the conductor bar 7 of each electrical connector 4 consists of a plurality of sheets 17, which are identical to one another and overlap one another; in this way, the conductor bar 7 is more flexible and, therefore, can more easily adjust to possible imperfections due to building tolerances (namely, the greater flexibility of the conductor bar 7 allows it to better make up for building tolerances). In other words, the sheet-like structure of the conductor bar 7 significantly increases the flexibility of the conductor bar 7, ensuring a greater ability to make up for building tolerances. By way of example, the conductor bar 7 could consist of six-eight sheets 17 identical to one another and overlapping one another, each having a thickness of circa one millimetre.

According to a preferred embodiment, each screw 9 consists of a head 18 and a cylindrical body, which projects from the head 18 and has an intermediate portion 19 without thread, which is arranged in contact with the head 18, and a threaded end portion 20, which is arranged opposite the head 18; the threaded end portion 20 is screwed into a corresponding threaded hole 8 of the conductor bar 7, whereas the intermediate portion 19 without thread is on the outside of the corresponding threaded hole 8 of the conductor bar 7. The intermediate portion 19 without thread of each screw 9 preferably has a smaller diameter than a diameter of the threaded end portion 20, so that the intermediate portion 19 has a clearance in all directions relative to the corresponding through hole 11 of the retaining sheet 10; in other words, the threaded end portion 20 can go through the corresponding through hole 11 of the retaining sheet 10 only after a screwing, whereas the intermediate portion 19 can be "*loose*" inside the corresponding through hole 11 of the retaining sheet 10 with a given clearance.

According to a preferred embodiment, in each screw 9, the intermediate portion 19 without thread has a length that is (at least) the same as the length of the threaded end portion 20; in this way, when the electrical connector 4 is laid on the terminals 5, both screws 9 can freely slide upwards (while waiting to be screwed into the corresponding threaded holes 6 of the terminals 5) thanks to the clearance present between each intermediate portion 19 and the corresponding through hole 11 of the retaining sheet 10, always keeping the electrical connector 4 horizontal (hence, permitting a simple and ideal screwing of the screws 9 into the corresponding threaded holes 6 of the terminals 5, without causing, during the screwing of the screws 9, any tension in the conductor bar 7 and in the terminals 5).

The electrical connector 4 described above has numerous advantages.

First of all, the electrical connector 4 disclosed above allows the terminals 5 of two adjacent battery modules 3 to be connected to one another creating a stable electrical connection with a low electrical resistance, even in the presence of relatively great building tolerances.

The electrical connector 4 disclosed above ensures an electrical insulation both during mounting operations and during maintenance operations.

The electrical connector 4 disclosed above offers to those operators who handle and install the electrical connector 4 a high degree of safety, since the screws 9 of the electrical connector 4 cannot get lost in any way; indeed, losing the screws 9 can pose a significant problem, for finding a lost screw 9 between the modules 3 is complicated (the space is very small) and dangerous (there always is the risk of accidentally touching a part under voltage).

Finally, the electrical connector 4 disclosed above allows the terminals 5 of two adjacent battery modules 3 to be electrically connected to one another in a simple and quick fashion.

### LIST OF THE REFERENCE NUMBERS OF THE FIGURES

- 1: power storage system
- 2: container
- 3: battery module
- 4: electrical connector
- 5: terminals
- 6: threaded hole
- 7: conductor bar
- 8: through holes
- 9: screws
- 10: retaining sheet
- 11: through holes
- 12: shell
- 13: lid
- 14: through slit
- 15: appendages
- 16: protuberance
- 17: sheets
- 18: head
- 19: intermediate portion
- 20: end portion

## Claims

1. An electrical connector (4) to connect the terminals (5) of two adjacent battery modules (3) to one another in a power storage system (1); the electrical connector (4) comprises:
a conductor bar (7), which is provided with two first through holes (8) and is configured to be laid on the two terminals (5) of the two battery modules (3);
a retaining sheet (10), which is laid on the conductor bar (7) on the opposite side relative to the terminals (5) of the two battery modules (3) and has two second through holes (11), each aligned with a corresponding first through hole (8); and
two screws (9), each arranged through a second through hole (9) of the retaining sheet (10) and through a first through hole (8) of the conductor bar (7) and configured to be screwed into a threaded hole (7) of a corresponding terminal (5);
the electrical connector (4) is **characterized in that:**
each screw (9) is arranged through the corresponding first through hole (8) with a clearance; and
each screw (9) is screwed into the corresponding second through hole (11).

2. The electrical connector (4) according to claim 1 and comprising a shell (12), which is made of an electrically insulating material, is open at the top and at the bottom and contains, on the inside, the conductor bar (7) and the retaining sheet (10).

3. The electrical connector (4) according to claim 2 and comprising a lid (13), which is made of an electrically insulating material and is coupled to the shell (12) so as to close the shell (12) at the top.

4. The electrical connector (4) according to claim 2 or 3, wherein the conductor bar (7) is completely locked in the shell (12) and, hence, cannot make any movement relative to the shell (12).

5. The electrical connector (4) according to claim 2, 3 or 4, wherein the retaining sheet (10) is contained in the shell (12), thus allowing the retaining sheet (10) to make transverse movements, namely movements in a plane that is perpendicular to a longitudinal axis of the screws (9).

6. The electrical connector (4) according to one of the claims from 2 to 5, wherein the retaining sheet (10) is inserted inside the shell (12) so that it cannot be extracted from the shell (12) once it is coupled to the screws (9).

7. The electrical connector (4) according to claim 6, wherein the shell (12) laterally has at least one through slit (14), through which the retaining sheet (10) can be inserted into the shell (12).

8. The electrical connector (4) according to claim 7, wherein the shell (12) laterally has two through slits (14) opposite one another and the retaining sheet (10) is longer than an inner space of the shell (12) so that the retaining sheet (10) can be arranged inside the shell (12) only by engaging, on both sides, the corresponding slits (14).

9. The electrical connector (4) according to claim 8, wherein, at the two ends, the retaining sheet (10) has two appendages (15) with a smaller width compared to a central part of the retaining sheet (10).

10. The electrical connector (4) according to claim 7, 8 or 9, wherein the through slit (14) is misaligned relative to the first through holes (8) so that the retaining sheet (10), once it is inserted through the through slit (14), has to be translated perpendicularly to the through slit (14)in order to align the second through holes (11) with the corresponding first through holes (8).

11. The electrical connector (4) according to one of the claims from 2 to 10, wherein the shell (12) comprises at least one protuberance (16), which has an asymmetric position or conformation relative to the shell (12) and is configured to engage an opening of the power storage system (1) only when the shell (12) has one single predetermined orientation.

12. The electrical connector (4) according to one of the claims from 1 to 11, wherein the conductor bar (7) consists of a plurality of sheets (17) identical to one another and overlapping one another.

13. The electrical connector (4) according to one of the claims from 1 to 12, wherein each screw (9) consists of a head (18) and of a cylindrical body, which projects from the head (18) and has an intermediate portion (19) without thread and arranged in contact with the head (18) and a threaded end portion (20) arranged on the side opposite the head (18).

14. The electrical connector (4) according to claim 13, wherein the intermediate portion (19) without thread of each screw (9) has a smaller diameter than a diameter of the threaded end portion (20).

15. The electrical connector (4) according to claim 13 or 14, wherein the intermediate portion (19) without thread of each screw (9) has a length that is at least the same as the length of the threaded end portion (20).

## Patentansprüche

1. Elektrischer Verbinder (4) zum gegenseitigen Verbinden der Anschlüsse (5) von zwei benachbarten Batteriemodulen (3) in einem Energiespeichersystem (1); der elektrische Verbinder (4) umfasst:
eine Stromschiene (7), die mit zwei ersten Durchgangslöchern (8) versehen ist und zum Auflegen auf die beiden Anschlüsse (5) der beiden Batteriemodule (3) konfiguriert ist;
ein Halteblech (10), das auf die den Anschlüssen (5) der beiden Batteriemodule (3) gegenüberliegenden Seite auf die Stromschiene (7) gelegt ist und zwei zweite Durchgangslöcher (11) aufweist, die jeweils mit einem entsprechenden ersten Durchgangsloch (8) ausgerichtet sind; und
zwei Schrauben (9), die jeweils durch ein zweites Durchgangsloch (9) des Halteblechs (10) und durch ein erstes Durchgangsloch (8) der Stromschiene (7) hindurch angeordnet sind und so konfiguriert sind, dass sie in ein Gewindeloch (7) eines entsprechenden Anschlusses (5) geschraubt werden können;
der elektrische Steckverbinder (4) ist **dadurch gekennzeichnet, dass:**
jede Schraube (9) durch das entsprechende erste Durchgangsloch (8) mit einem Spiel angeordnet ist; und
jede Schraube (9) in das entsprechende zweite Durchgangsloch (11) geschraubt ist.

2. Elektrischer Verbinder (4) nach Anspruch 1 und umfassend ein Gehäuse (12), das aus einem elektrisch isolierenden Material ( ) besteht, oben und unten offen ist und auf der Innenseite die Stromschiene (7) und das Halteblech (10) enthält.

3. Elektrischer Verbinder (4) nach Anspruch 2 und umfassend einen Deckel (13), der aus einem elektrisch isolierenden Material besteht und mit dem Gehäuse (12) so verbunden ist, dass er das Gehäuse (12) nach oben hin verschließt.

4. Elektrischer Verbinder (4) nach Anspruch 2 oder 3, wobei die Stromschiene (7) vollständig im Gehäuse (12) verriegelt ist und daher keine Bewegung relativ zum Gehäuse (12) ausführen kann.

5. Elektrischer Verbinder (4) nach Anspruch 2, 3 oder 4, wobei das Halteblech (10) in dem Gehäuse (12) enthalten ist, so dass das Halteblech (10) Querbewegungen ausführen kann, nämlich Bewegungen in einer Ebene, die senkrecht zu einer Längsachse der Schrauben (9) verläuft.

6. Elektrischer Verbinder (4) nach einem der Ansprüche 2 bis 5, wobei das Halteblech (10) in das Innere des Gehäuses (12) eingesetzt ist, so dass es nicht aus dem Gehäuse (12) herausgezogen werden kann, sobald es mit den Schrauben (9) gekoppelt ist.

7. Elektrischer Verbinder (4) nach Anspruch 6, wobei das Gehäuse (12) seitlich mindestens einen durchgehenden Schlitz (14) aufweist, durch den das Halteblech (10) in das Gehäuse (12) eingeführt werden kann.

8. Elektrischer Verbinder (4) nach Anspruch 7, wobei das Gehäuse (12) seitlich zwei einander gegenüberliegende durchgehende Schlitze (14) aufweist und das Halteblech (10) länger als ein Innenraum des Gehäuses (12) ist, so dass das Halteblech (10) nur durch beidseitiges Eingreifen in die entsprechenden Schlitze (14) innerhalb des Gehäuses (12) angeordnet werden kann.

9. Elektrischer Verbinder (4) nach Anspruch 8, wobei das Halteblech (10) an den beiden Enden zwei Fortsätze (15) mit einer geringeren Breite im Vergleich zu einem mittleren Teil des Halteblechs (10) aufweist.

10. Elektrischer Verbinder (4) nach Anspruch 7, 8 oder 9, wobei der Durchgangsschlitz (14) relativ zu den ersten Durchgangslöchern (8) versetzt ist, so dass die Halteplatte (10), sobald sie durch den Durchgangsschlitz (14) eingeführt ist, senkrecht zum Durchgangsschlitz (14) verschoben werden muss, um die zweiten Durchgangslöcher (11) mit den entsprechenden ersten Durchgangslöchern (8) auszurichten.

11. Elektrischer Verbinder (4) nach einem der Ansprüche 2 bis 10, wobei das Gehäuse (12) mindestens einen Vorsprung (16) aufweist, der eine asymmetrische Position oder Formgebung relativ zum Gehäuse (12) aufweist und so konfiguriert ist, dass er nur dann in eine Öffnung des Energiespeichersystems eingreift, wenn das Gehäuse (12) eine einzige vorbestimmte Ausrichtung aufweist.

12. Elektrischer Verbinder (4) nach einem der Ansprüche 1 bis 11, wobei die Stromschiene (7) aus einer Vielzahl von untereinander gleichen und sich überlappenden Blechen (17) besteht.

13. Elektrischer Verbinder (4) nach einem der Ansprüche 1 bis 12, wobei jede Schraube (9) aus einem Kopf (18) und aus einem zylindrischen Körper besteht, der aus dem Kopf (18) herausragt und einen in Kontakt mit dem Kopf (18) angeordneten gewindelosen Zwischenabschnitt (19) und einen auf der dem Kopf (18) gegenüberliegenden Seite angeordneten Gewindeendabschnitt (20) aufweist.

14. Elektrischer Verbinder (4) nach Anspruch 13, wobei der gewindelose Zwischenabschnitt (19) jeder Schraube (9) einen kleineren Durchmesser aufweist als der Durchmesser des Gewindeendabschnitts (20).

15. Elektrischer Verbinder (4) nach Anspruch 13 oder 14, wobei der gewindelose Zwischenabschnitt (19) jeder Schraube (9) eine Länge aufweist, die mindestens gleich der Länge des Gewindeendabschnitts (20) ist.

## Revendications

1. Connecteur électrique (4) pour connecter les bornes (5) de deux modules de batterie adjacents (3) l'un à l'autre dans un système de stockage d'énergie (1) ; le connecteur électrique (4) comprend :
une barre conductrice (7), qui est pourvue de deux premiers trous traversants (8) et est configurée pour être posée sur les deux bornes (5) des deux modules de batterie (3) ;
une feuille de retenue (10), qui est posée sur la barre conductrice (7) du côté opposé aux bornes (5) des deux modules de batterie (3) et qui comporte deux seconds trous traversants (11), chacun aligné avec un premier trou traversant correspondant (8) ; et
deux vis (9), chacune disposée à travers un second trou traversant (9) de la feuille de retenue (10) et à travers un premier trou traversant (8) de la barre conductrice (7) et configurée pour être vissée dans un trou fileté (7) d'une borne correspondante (5) ;
le connecteur électrique (4) **est caractérisé en ce que :**
chaque vis (9) est disposée à travers le premier trou traversant correspondant (8) avec un jeu ; et
chaque vis (9) est vissée dans le second trou traversant correspondant (11).

2. Connecteur électrique (4) selon la revendication 1 et comprenant une enveloppe (12), qui est constituée d'un matériau électriquement isolant , est ouverte en haut et en bas et contient, à l'intérieur, la barre conductrice (7) et la feuille de retenue (10).

3. Connecteur électrique (4) selon la revendication 2 et comprenant un couvercle (13), qui est constitué d'un matériau électriquement isolant et est couplé à l'enveloppe (12) de manière à fermer l'enveloppe (12) sur le dessus.

4. Connecteur électrique (4) selon la revendication 2 ou 3, dans lequel la barre conductrice (7) est complètement verrouillée dans l'enveloppe (12) et, par conséquent, ne peut faire aucun mouvement par rapport à l'enveloppe (12).

5. Connecteur électrique (4) selon la revendication 2, 3 ou 4, dans lequel la feuille de retenue (10) est contenue dans l'enveloppe (12), permettant ainsi à la feuille de retenue (10) d'effectuer des mouvements transversaux, à savoir des mouvements dans un plan qui est perpendiculaire à un axe longitudinal des vis (9).

6. Connecteur électrique (4) selon l'une des revendications de 2 à 5, dans lequel la feuille de retenue (10) est insérée à l'intérieur de l'enveloppe (12) de manière à ne pas pouvoir être extraite de l'enveloppe (12) une fois qu'elle est couplée aux vis (9).

7. Connecteur électrique (4) selon la revendication 6, dans lequel l'enveloppe (12) présente latéralement au moins une fente traversante (14), à travers laquelle la feuille de retenue (10) peut être insérée dans l'enveloppe (12).

8. Connecteur électrique (4) selon la revendication 7, dans lequel l'enveloppe (12) présente latéralement deux fentes traversantes (14) opposées l'une à l'autre et la feuille de retenue (10) est plus longue qu'un espace intérieur de l'enveloppe (12) de sorte que la feuille de retenue (10) ne peut être disposée à l'intérieur de l'enveloppe (12) qu'en s'engageant, des deux côtés, dans les fentes correspondantes (14).

9. Connecteur électrique (4) selon la revendication 8, dans lequel, aux deux extrémités, la feuille de retenue (10) comporte deux appendices (15) avec une largeur plus petite comparée à une partie centrale de la feuille de retenue (10).

10. Connecteur électrique (4) selon la revendication 7, 8 ou 9, dans lequel la fente traversante (14) est désalignée par rapport aux premiers trous traversants (8) de sorte que la feuille de retenue (10), une fois insérée à travers la fente traversante (14), doit être translatée perpendiculairement à la fente traversante (14) afin d'aligner les seconds trous traversants (11) avec les premiers trous traversants correspondants (8).

11. Connecteur électrique (4) selon l'une des revendications de 2 à 10, dans lequel l'enveloppe (12) comprend au moins une protubérance (16), qui a une position ou une conformation asymétrique par rapport à l'enveloppe (12) et est configurée pour s'engager dans une ouverture du système de stockage d'énergie uniquement lorsque l'enveloppe (12) a une seule orientation prédéterminée.

12. Connecteur électrique (4) selon l'une des revendications de 1 à 11, dans lequel la barre conductrice (7) est constituée d'une pluralité de feuilles (17) identiques entre elles et se chevauchant entre elles.

13. Connecteur électrique (4) selon l'une des revendications de 1 à 12, dans lequel chaque vis (9) est constituée d'une tête (18) et d'un corps cylindrique, qui fait saillie à partir de la tête (18) et présente une partie intermédiaire (19) non filetée et disposée en contact avec la tête (18) et une partie terminale filetée (20) disposée sur le côté opposé à la tête (18).

14. Connecteur électrique (4) selon la revendication 13, dans lequel la partie intermédiaire (19) sans filetage de chaque vis (9) a un diamètre inférieur à un diamètre de la partie terminale filetée (20).

15. Connecteur électrique (4) selon la revendication 13 ou 14, dans lequel la partie intermédiaire (19) sans filetage de chaque vis (9) a une longueur qui est au moins égale à la longueur de la partie terminale filetée (20).
